Europäisches Patentamt

European Patent Office

Office européen des brevets

(19)

(11) Veröffentlichungsnummer : **0 340 261 B1**

## (12) EUROPÄISCHE PATENTSCHRIFT

(45) Veröffentlichungstag der Patentschrift :
**10.06.92 Patentblatt 92/24**

(51) Int. Cl.$^5$ : **B26F 1/44**

(21) Anmeldenummer : **88908659.1**

(22) Anmeldetag : **11.10.88**

(86) Internationale Anmeldenummer :
**PCT/CH88/00187**

(87) Internationale Veröffentlichungsnummer :
**WO 89/03751 05.05.89 Gazette 89/10**

(54) SCHNITT- UND FORMWERKZEUG FÜR KOMPLEXE FLÄCHENGEBILDE.

(30) Priorität : **29.10.87 CH 4241/87**

(43) Veröffentlichungstag der Anmeldung :
**08.11.89 Patentblatt 89/45**

(45) Bekanntmachung des Hinweises auf die
Patenterteilung :
**10.06.92 Patentblatt 92/24**

(84) Benannte Vertragsstaaten :
**AT BE CH DE FR GB IT LI LU NL SE**

(56) Entgegenhaltungen :
**DE-C- 42 995**
**US-A- 1 411 774**

(73) Patentinhaber : **A A W Produktions
Aktiengesellschaft
Industrie Neusand 823
FL-9495 Triesen (LI)**

(72) Erfinder : **PIRCHL, Gerhard
Seestrasse 341
CH-5708 Birrwil (CH)**

(74) Vertreter : **Bruderer, Werner
Patentanwaltskanzlei Oberhittnauerstrasse
12
CH-8330 Pfäffikon (CH)**

EP 0 340 261 B1

## Beschreibung

Die Erfindung betrifft ein Schnitt- und Formwerkzeug für komplexe Flächengebilde bestehend aus einem Werkzeugoberteil mit Schnittstempel und einem Werkzeugunterteil mit Schnittplatte, wobei Schnittstempel und Schnittplatte je eine Schnittkante aufweisen, welche der Form einer gemeinsamen, kontinuierlichen Schnittlinie folgen.

Werkzeuge dieser Art sind allgemein bekannt und finden Verwendung beim Zuschneiden und Formen von grossflächigen Blechen und mehrschichtigen Formplatten. Bei den bekannten Werkzeugen für grossflächige Platten sind der Schnittstempel und die Schnittplatte als Rahmen ausgebildet. Derartige rahmenförmige Schnittstempel und Schnittplatten sind vor allem bei komplizierten Schnittformen schwierig herzustellen. Wegen der geforderten Präzision bestehen sie zumeist aus einem einzigen Stück, was beim Härten oder bei nachfolgenden Temperatureinwirkungen zum Verzug der Schnittkanten führt. Bei Beschädigungen einzelner Partien der Schnittkanten muss häufig das ganze Werkzeug ersetzt werden, und die Reparaturen sind aufwendig und teuer. Schnittkanten, welche nicht in einer Ebene liegen, sondern einer Raumform in drei Dimensionen folgen, lassen sich nur mit sehr grossem Aufwand und entsprechend ausgestatteten Werkzeugmaschinen herstellen.

Aus DE-C-42 995 ist für die Verarbeitung von Pappe ein Werkzeug bekannt, bei welchem am Oberteil Schnittmesser angeordnet sind, das Unterteil jedoch eine flache Gegenplatte mit weicher Oberfläche aufweist. Das Werkzeugunterteil weist keine Schnittkanten auf, so das hier das Problem des genauen Zusammenwirkens zwischen Ober- und Unterteil des Werkzeuges nicht besteht. Die Schnittmesser im Oberteil sind aus Einzelelementen zusammengestellt und im Oberteil verankert. Zum Schneiden von Pappe oder ähnlichem Material lassen sich auf diese Weise in einer Ebene kontinuierliche Schnittlinien bilden. Diese Anordnung ist jedoch zum Schnieden von Blechen und von Formplatten vollständig ungeeignet, da die Schnittmesser sofort zerstört würden.

Es ist Aufgabe der vorliegenden Erfindung, ein Schnitt- und Formwerkzeug zu schaffen, mit welchem komplexe Flächengebilde in der Form von Blechen oder Formplatten einwandfrei bearbeitet, und auch Schnittkanten, welche einer dreidimensionalen Raumform folgen, einfach hergestellt werden können. Eine weitere Aufgabe der Erfindung besteht darin, einen neuen Aufbau für Schnittstempel und Schnittplatten zu finden, bei welchem die Herstellung, die Bearbeitung und die Reparatur der Schnittkanten vereinfacht und kostengünstiger wird.

Diese Aufgabe wird dadurch gelöst, dass die Schnittplatte und der Schnittstempel im Bereiche der Kontinuierlichen Schnittlinie aus einer Vielzahl von zylinderförmigen aneinander gereihten Schneidelementen mit mehreckigem Querschnitt bestehen, jedes der Schneidelemente in der ersten Stirnfläche eine Schnittkante aufweist, diese Schnittkanten der einzelnen Elemente die Schnittlinie bilden, und die zweite Stirnfläche und der angrenzende Endbereich jedes einzelnen Schneidelementes in der Schnittplatte oder dem Schnittstempel verankert ist.

In weiterer Ausgestaltung der Erfindung bildet je ein Schneidelement im Werkzeugoberteil und im Werkzeugunterteil ein Paar, und die Mittelachsen dieser beiden Schneidelemente sind deckungsgleich, und die Stirnflächen mit den Schnittkanten sind gegeneinander gerichtet. Eine weitere Verbesserung des Werkzeuges kann dadurch erreicht werden, dass die Schneidelemente einen sechseckigen Querschnitt aufweisen, im Bereiche der ersten Stirnfläche ein stufenförmiger Absatz mit einer Schnittfläche ausgebildet ist, und die Schnittkante von einer Ecke des Sechsecks durch die Mittelachse zur gegenüberliegenden Ecke verläuft.

Im Schnittstempel und der Schnittplatte sind entsprechend dem Verlauf der Schnittlinie Aussparungen angeordnet. Die einzelnen Schneidelemente werden in diese Aussparungen eingesetzt, wobei die Schnittkanten der aneinander stossenden, bzw. aneinander gereihten Schneidelemente aufeinander ausgerichtet sind, und eine an die Schnittlinie angenäherte Schnittkante bilden. Grundsätzlich sind Schneidelemente mit dreieckförmigem Querschnitt bereits einsetzbar. Als besonders geeignet erweisen sich jedoch Schneidelemente mit sechseckigem Querschnitt, da diese symmetrisch ausgebildet sind und deshalb an beliebige Krümmungen der Schnittlinie angenähert werden können. Sehr starke Krümmungen werden hergestellt, indem die Querschnittsfläche der einzelnen Elemente verkleinert wird und dadurch kleinere Radien möglich werden. Damit die Schnittkanten der Schneidelemente im Werkzeugunterteil und im Werkzeugoberteil genau aufeinander passen, wird je ein Schneidelement im Werkzeugoberteil und im Werkzeugunterteil zu einem Paar zusammengefasst. Deren Mittelachsen werden deckungsgleich angeordnet, und die Stirnflächen mit den Schnittkanten sind gegeneinander gerichtet. Die Verankerung der Schneidelemente im Schnittstempel oder in der Schnittplatte erfolgt mittels bekannter Möglichkeiten, zum Beispiel durch Klemmkeile, Schrauben oder mittels Klebstoff. In weiterer Ausgestaltung der Erfindung konvergiert der Querschnitt der Schneidelemente von der Stirnfläche mit der Schnittkante zur zweiten Stirnfläche. Diese Verringerung des Querschnittes der Schneidelemente von der Stirnfläche mit der Schnittkante zur zweiten Stirnfläche am Endbereich, welcher in der Schnittplatte oder dem Schnittstempel verankert ist, ermöglicht die Herstellung von gekrümmten Schnittlinien, welche in Richtung der Werkzeugbewegung gekrümmt sind. Konvexe Schnittlinien können mit den verjüngten Schneidelementen, und konkave Linien mit den normalen zylindrischen Elementen hergestellt werden. Auch hier finden bei engen Radien Schneidelemente mit kleinerem Querschnitt Verwendung.

Eine bevorzugte Ausführungsform der Erfindung ist dadurch gekennzeichnet, dass das Material des Schnittstempels und der Schnittplatte eine Kunststoffmasse ist und die Schneidelemente in diese Masse eingegossen sind. Als Kunststoffmasse sind aushärtende Kunststoffe mit oder ohne Füllstoff verwendbar. Bekannte derartige Kunststoffe sind Polyester-, Epoxyd- oder Polyurethanharze. Die Schneidelemente werden in entsprechende Aussparungen im Schnittstempel und der Schneidplatte eingesetzt und eingegossen, oder auf einem Werkzeugmodell lagerichtig positioniert, und dann der Schnittstempel oder die Schnittplatte gegossen.

In weiterer Ausgestaltung der Erfindung begrenzen die Schneidelemente des Werkzeugunterteiles einen Formhohlraum, ein Teilbereich der Stirnfläche mit der Schnittkante ist gegen den Formhohlraum abgeschrägt, die Mantelfläche des Schneidelementes steht über die Formfläche des Formholraumes vor und bildet eine etwa rechtwinklig dazu stehende Wandung. Die Schneidelemente des Werkzeugoberteiles weisen an den stufenförmigen Absatz angrenzende federnde Zungen auf. Diese Ausgestaltung der Schneidelemente ist geeignet für Formplatten, bei welchen im gleichen Werkzeug der Rand beschnitten und die Platte in eine Raumform gebracht werden soll. Dazu ist der Schnittstempel des Werkzeugoberteiles kragenförmig um einen Pressstempel angeordnet, und zwischen Schnittstempel und Werkzeugoberteil ist eine Kupplungseinrichtung angeordnet. Mit dem Pressstempel werden die komplexen Flächengebilde, bzw. Platten, geformt, und die speziell ausgebildeten Schneidelemente ermöglichen das Aufstellen und Umfalzen der Randbereiche. Im gleichen Werkzeug werden die Randbereiche beschnitten, was die kostengünstige und rasche Herstellung von komplexen Formplatten ermöglicht.

Die mit der Erfindung erzielten Vorteile bestehen insbesondere darin, dass auch grossflächige Werkzeuge einfach und kostengünstig hergestellt werden können. Da nur die Schneidelemente aus gehärtetem Stahl bestehen, ist das Herstellen und Schleifen der Schnittkanten sehr einfach. Die durch das Zusammensetzen der Schnittkanten der einzelnen Schneidelemente mögliche Annäherung an die gewünschte Schnittlinie ist für viele Anwendungen bei Blechen sowie ein- und mehrschichtigen Formplatten genügend und führt zu einer kostengünstigen Produktionsweise. Bei Verwendung von Kunststoffen als Trägermaterial für den Schnittstempel und die Schnittplatte sowie für das Gesenk und den Pressstempel lassen sich die Herstellkosten weiterhin reduzieren, und die Werkzeuge werden leichter und einfacher für den Gebrauch.

Im folgenden werden Ausführungsbeispiele und weitere Vorteile der Erfindung anhand der Zeichnungen näher erläutert. Es zeigen:

Fig. 1 einen Teilschnitt durch den Randbereich eines erfindungsgemässen Werkzeuges,

Fig. 2 ein Schneidelement mit sechseckigem Querschnitt,

Fig. 3 ein Schneidelement mit angeformtem federndem Element für ein Schneid- und Presswerkzeug,

Fig. 4 die Anordnung von Schneidelementen mit sechseckigem Querschnitt entlang der Schnittlinie in einer Aufsicht.

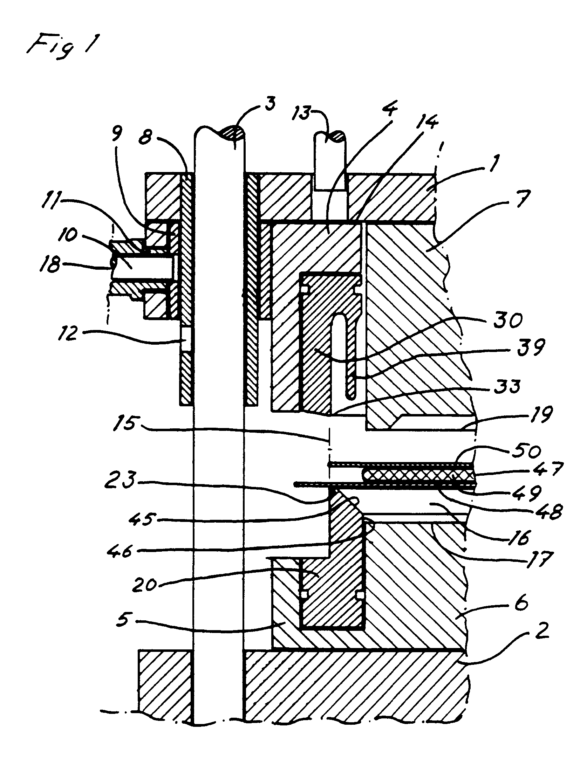

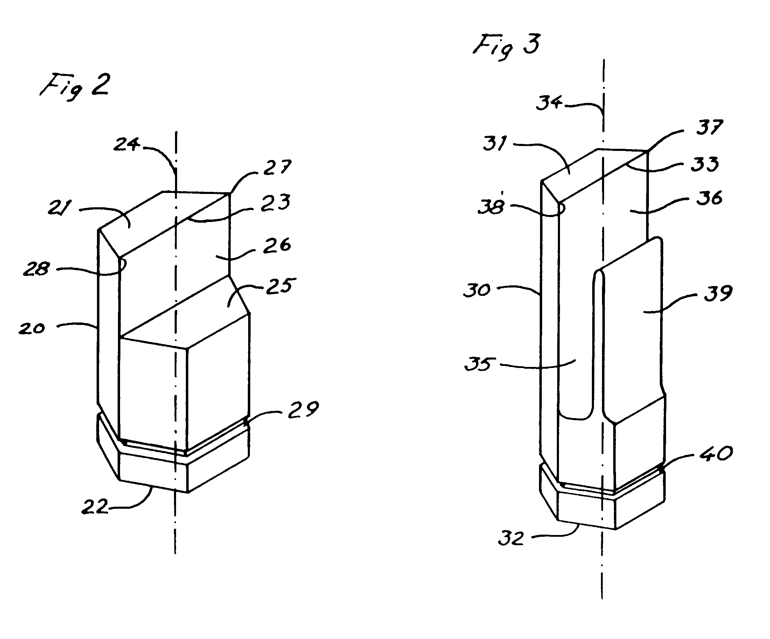

Das in Figur 1 dargestellte Werkzeug besteht aus einem Werkzeugoberteil 1 und einem Werkzeugunterteil 2, welche über Führungen 3 miteinander verbunden sind. Dabei ist das Werkzeugoberteil 1 mit Führungsbüchsen 8 verbunden, welche entlang der Führungen 3 gleiten. Das Werkzeugoberteil 1 ist mit weiteren bekannten, jedoch nicht dargestellten Einrichtungen, wie Verbindungen zum Bewegungsantrieb und Hilfseinrichtungen verbunden. Am Werkzeugteil 1 ist ein Pressstempel 7 befestigt. Um den Pressstempel 7 ist ein kragenförmiger Schnittstempel 4 angeordnet, wobei dieser Schnittstempel 4 durch nicht dargestellte Federn gegen das Werkzeugoberteil 1 gepresst und mittels der Führungsbüchsen 8, 9 auf den Führungen 3 geführt wird. Am Aussenbereich dieses Schnittstempels 4 ist eine Kupplungseinrichtung 18 angeordnet, welche über einen Kupplungszapfen 10 verfügt. Dieser Kupplungszapfen 10 ist in einer Gleitbüchse 11 geführt und ist im oberen Totpunkt des Werkzeugoberteiles 1 in die Kupplungsbohrung 12 an den Führungsbüchsen 8 einrückbar. Der Schnittstempel 4 stösst in dieser Position mit der oberen Fläche 14 an Anschläge 13. An der gegen den Press stempel 7 gerichteten Seite des kragenförmigen Schnittstempels 4 sind Schneidelemente 30 angeordnet und verankert. Diese Schneidelemente 30 sind entsprechend der Darstellung in Figur 3 ausgebildet.

Am Werkzeugunterteil 2 ist ein Gesenk 6 befestigt, welches im Aussenbereich die Schnittplatte 5 bildet. In der Schnittplatte 5 sind Schneidelemente 20 verankert, wobei diese Schneidelemente 20 und das Gesenk 6 einen Formhohlraum 16 bilden. Dieser Formhohlraum 16 ist entsprechend dem Pressstempel 7 ausgebildet und weist eine Formfläche 17 auf, welche einer mehrschichtigen Formplatte 47 die gewünschte Form gibt. Die einzelnen Schichten 48, 49, 50 der Formplatte 47 sind in Figur 1 in ihrer Ausgangsform vor dem Beginn des Formpressens dargestellt. Die Schnittkanten 23 und 33 der Schneidelemente 20 und 30 sind auf die Schnittlinie 15 ausgerichtet und beschneiden beim Zusammenfahren der beiden Werkzeugteile den Randbereich der Aussenschicht 48 der Formplatte 47. Das Schneidelement 20 entspricht der in Figur 2 dargestellten Ausführungsform, wobei jedoch die erste Stirnfläche 21 einen abgeschrägten Teilbereich 45 aufweist. Das Schneidelement 20 ist so in der Schnittplatte 5 positioniert, dass die Mantelfläche 46 so weit über die Formfläche 17 vorsteht, dass sich eine Wandung ergibt, welche mindestens so hoch ist wie die am Ende des Formvorganges zusammengepressten und gefalzten Aussenschichten 48 und 50 der Formplatte 47.

Im dargestellten Beispiel bestehen sowohl Schnittstempel 4, Pressstempel 7 wie auch Schnittplatte 5 und Gesenk 6 aus einer Kunststoffmasse. Die Schneidelemente 20 und 30 sind in die Schnittplatte 5, bzw. den Schnittstempel 4 eingegossen.

Die Herstellung von Formplatten 47 im dargestellten kombinierten Schnitt- und Formwerkzeug erfolgt in der Weise, dass die unbeschnittene Aussenschicht 48 und dann die zu geschnittene Isolationsschicht 49 und die Aussenschicht 50 in das göeffnete Werkzeug eingelegt werden. Dann wird das obere Werkzeugteil 1 gegen das untere Werkzeugteil 2 gefahren, und der Pressstempel 7 presst die einzelnen Schichten 48, 49, 50 der Formplatte 47 in die gewünschte Form, wobei vor Beendigung des Formvorganges die Schnittkanten 23 und 33 der Schneidelemente 20 und 30 den Randbereich der Aussenscheicht 48 beschneiden. Das Werkzeug verfügt im weiteren über nicht dargestellte Niederhalter für die Aussenschicht 48, welche im gezeigten Beispiel aus einem Aluminiumblech besteht. Durch das Zusammenpressen des Pressstempels 7 und des Gesenkes 6 wird der Randbereich der Aussenschicht 48 an der Wandung, welche durch die Wandbereiche 17 der Schneidelemente 20 gebildet wird aufgestellt, und die Aussenschicht 50 wird um die Isolationsschicht 49 gelegt und an die Aussenschicht 48 angepresst. Das Werkzeugoberteil 1 wird danach in den oberen Totpunkt gefahren, und in dieser Position der Kupplungszapfen 10 in die Kupplungsbohrung 12 eingerückt und damit der Schnittstempel 4 mit dem Werkzeugoberteil 1 derart verbunden, dass die Enden der federnden Elemente 39 über die Stirnfläche 19 des Pressstempels 7 vorstehen. Beim erneuten Zusammenfahren der beiden Werkzeugteile treffen die Enden der federnden Elemente 39 auf die schrägen Teilbereiche 45 an den Schneidelementen 20 auf und werden gegen das Innere des Formhohlraumes 16 abgelenkt. Dadurch legen sie die aufgestellten Randbereiche der Aussenschicht 48 vollständig um, so dass ein Falz gebildet und der Randbereich der Aussenschicht 50 eingeklemmt wird. Das Werkzeugoberteil 1 wird erneut in den oberen Totpunkt zurückgefahren und der Kupplungszapfen 10 ausgerückt. Nach Entnahme der fertig geformten und beschnittenen Formplatte 47 ist das Werkzeug für weitere Arbeitsgänge bereit.

Das in Figur 2 dargestellte einzelne Schneidelement 20 weist eine sechseckige Querschnittsfläche auf. Das Schneidelemente 20 besteht aus gehärtetem Stahl. Am oberen Ende ist ein Absatz 25 ausgeschnitten, wodurch eine Schnittflä che 26 mit einer Schnittkante 23 gebildet ist. Diese Schnittkante 23 verläuft von einer Ecke 27 des sechseckigen Querschnittes durch die Mittelachse 24 zur gegenüber liegenden Ecke 28. Die Schnittkante 23 ist eine Begrenzungslinie der ersten Stirnfläche 21, welche einen Schnittwinkel mit der Schnittfläche 26 einschlieesst. Die zweite Stirnfläche 22 ist am unteren Endbereich des Schneidelementes 20 angeordnet. In diesem Endbereich läuft eine Nute 29 um den Mantel des Schneidelementes 20, welche zur Verankerung in einer Schnittplatte oder einem Schnittstempel dient. Dieses Schneidelement 20 findet sowohl in Werkzeugen Verwendung, welche nur der Ausführung von Randschnitten von Flächengebilden dienen, als auch in kombinierten Schnitt-/Formwerkzeugen. Zur Herstellung von Schnittwerkzeugen wird eine Vielzahl von Schneidelementen 20 aneinander gereiht, wobei die Ecke 27 jeweils genau auf die Ecke 28 des nächstfolgenden Elementes ausgerichtet ist. Durch Verdrehen der Elemente um die Längsachse 24 und Kippen der Längsachse 24 können beliebige Konturen von Schnittlinien hergestellt werden.

Das in Figur 3 dargestellte Schneidelement 30 ist für den Einsatz in kombinierten Schnitt-/Formwerkzeugen gemäss Figur 1 ausgebildet. Das Schneidelement 30 ist länger als das Schneidelement 20 gemäss Figur 2 und weist im Bereiche des Absatzes 35 ein federelastisches Element 39 auf, welches einstückig aus dem Schneidelement 30 geformt ist. Zur Herstellung dieses Schneidelementes 30 ist gehärteter Federstahl geeignet. Eine erste Stirnfläche 31 schliesst mit einer Schnittfläche 36 einen Schnittwinkel ein und bildet die Schnittkante 33. Diese verläuft von der Ecke 37 des sechseckigen Querschnittes durch die Mittelachse 34 zur gegenüberliegenden Ecke 38. Mit Abstand zur zweiten Stirnfläche 32 ist am unteren Ende des Schneidelementes 30 eine Nute 40 angeordnet, welche der Verankerung des Schneidelementes 30 im Schnittstempel 4 dient.

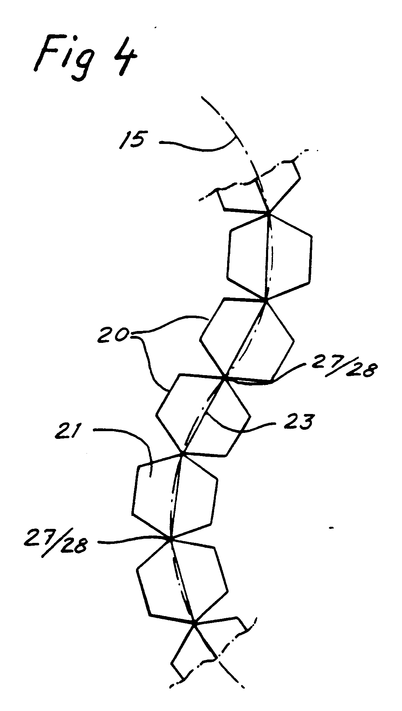

Wie in Figur 4 dargestellt, können mit sechseckigen Schneidelementen 20 kompliziert geformte Schnittlinien 15 sehr gut angenähert werden. Die Schnittkanten 23 bilden beim kurvenförmigen Verlauf der Schnittlinie 15 Sekanten oder Tangenten an diese Schnittlinie 15. Die Schneidelemente 20 werden an den Ecken 27, 28 nahtlos aneinander gefügt, wodurch sich eine ununterbrochene Schnittkante ergibt.

**Patentansprüche**

1. Schnitt- und Formwerkzeug für komplexe Flächengebilde bestehend aus einem Werkzeugoberteil (1) mit Schnittstempel (4) und einem Werkzeugunterteil (2) mit Schnittplatte (5), wobei Schnittstempel (4) und Schnittplatte (5) je eine Schnittkante aufweisen, welche der Form einer gemeinsamen, kontinuierlichen Schnittlinie (15) folgen, dadurch gekennzeichnet, dass die Schnittplatte (5) und der Schnittstempel (4) im Bereiche der kontinuierlichen Schnittlinie (15) aus einer Vielzahl von zylinderförmigen aneinandergereihten Schneidelementen (20, 30) mit mehreckigem Querschnitt bestehen, jedes der Schneidelemente (20, 30) in der ersten Stirnfläche (21, 31) eine Schnittkante (23, 33) aufweist, diese Schnittkanten (23, 33) der einzelnen Elemente (20, 30) die Schnittlinie bilden, und die zweite Stirnfläche (22, 32) und der angrenzende Endbereich jedes einzelnen Schneidelementes (20, 30) in der Schnittplatte (5) oder dem Schnittstempel (4) verankert ist.

2. Schnitt- und Formwerkzeug nach Patentanspruch 1, dadurch gekennzeichnet, dass je ein Schneidelement (20, 30) im Werkzeugoberteil (1) und im Werkzeugunterteil (2) ein Paar bilden, die Mittelachsen (24, 34) dieser beiden Schneidelemente (20, 30) deckungsgleich und die Stirnflächen (21, 31) mit den Schnittkanten (23, 33) gegeneinander gerichtet sind.

3. Schnitt- und Formwerkzeug nach Patentanspruch 1 oder 2, dadurch gekennzeichnet, dass die Schneidelemente (20, 30) einen sechseckigen Querschnitt aufweisen, im Bereiche der ersten Stirnfläche (21, 31) ein stufenförmiger Absatz (25, 35) mit einer Schnittfläche (26, 36) ausgebildet ist und die Schnittkante (23, 33) von einer Ecke (27, 37) des Sechseckes durch die Mittelachse (24, 34) zur gegenüberliegenden Ecke (28, 38) verläuft.

4. Schnitt- und Formwerkzeug nach einem der Patentansprüche 1 bis 3, dadurch gekennzeichnet, dass der Querschnitt der Schneidelemente (20, 30) von der ersten Stirnfläche (21, 31) mit der Schnittkante (23, 33) zur zweiten Stirnfläche (22, 32) konvergiert.

5. Schnitt- und Formwerkzeug nach einem der Patentansprüche 1 bis 4, dadurch gekennzeichnet, dass das Material des Schnittstempels (4) und der Schnittplatte (5) eine Kunststoff-Masse ist und die Schneidelemente (20, 30) in diese Masse eingegossen sind.

6. Schnitt- und Formwerkzeug nach einem der Patentansprüche 1 bis 5, dadurch gekennzeichnet, dass die Schneidelemente (20) des Werkzeugunterteiles (2) einen Formhohlraum (16) begrenzen, ein Teilbereich (45) der ersten Stirnfläche (21) mit der Schnittkante (23) gegen den Formhohlraum (16) abgeschrägt ist, die Mantelfläche (46) des Schneidelementes (20) über die Formfläche (17) des Formhohlraumes (16) vorsteht und eine etwa rechtwinklig dazu stehende Wandung bildet.

7. Schnitt- und Formwerkzeug nach Patentanspruch 6, dadurch gekennzeichnet, dass die Schneidelemente (30) des Werkzeugoberteiles (1) angrenzend an den stufenförmigen Absatz (35) federnde Elemente (39) aufweisen.

8. Schnitt- und Formwerkzeug nach einem der Patentansprüche 6 oder 7, dadurch gekennzeichnet, dass der Schnittstempel (4) des Werkzeugoberteiles (1) kragenförmig um einen Pressstempel (7) angeordnet und zwischen Schnittstempel (4) und Werkzeugoberteil (1) eine Kupplungseinrichtung (18) angeordnet ist.

**Claims**

1. A cutting and moulding tool for complex surface formations, consisting of a tool upper part (1) with a cutting stamp (4) and a tool lower part (2) with a die plate (5), the cutting stamp (4) and the die plate (5) each having a cutting edge following the shape of a common, continuous cutting line (15), characterised in that the die plate (5) and the cutting stamp (4), in the region of the continuous cutting line (15), consist of a plurality of cylindrical, adjacent cutting elements (20, 30) of polygonal cross-section, each of the cutting elements (20, 30) having a cutting edge (23, 33) in the first end face (21, 31), these cutting edges (23, 33) of the individual elements (20, 30) forming the cutting line, and the second end face (22, 32) and the adjacent end region of each individual cutting element (20, 30) being anchored in the die plate (5) or the cutting stamp (4).

2. A cutting and moulding tool according to claim 1, characterised in that each cutting element (20, 30) in the tool upper part (1) and in the tool lower part (20) form a pair, the central axes (24, 34) of these two cutting elements (20, 30) being congruent and the end faces (21, 31) with the cutting edges (23, 33) being oriented towards one another.

3. A cutting and moulding tool according to claim 1 or 2, characterised in that the cutting elements (20, 30) have a hexagonal cross-section, a step-like shoulder (25, 35) with a cutting face (26, 36) is formed in the region of the first end face (21, 31), and the cutting edge (23, 33) extends from one corner (27, 37) of the hexagon through the central axis (24, 34) to the opposite corner (28, 38).

4. A cutting and moulding tool according to one of claims 1 to 3, characterised in that the cross-section of the cutting elements (20, 30) converges from the first end face (21, 31) with the cutting edge (23, 33) to the second end face (22, 32).

5. A cutting and moulding tool according to one of claims 1 to 4, characterised in that the material of the cutting stamp (4) and of the die plate (5) is a plastics mass and the cutting elements (20, 30) are integrally cast in this mass.

6. A cutting and moulding tool according to one of claims 1 to 5, characterised in that the cutting elements (20) of the tool lower part (2) define a mould cavity (16), a partial area (45) of the first end face (21) with the cutting edge (23) slopes down towards the mould cavity (16) and the circumferential face (46) of the cutting element (20) projects above the mould face (17) of the mould cavity (16) and forms a partition approximately at right angles thereto.

7. A cutting and moulding tool according to claim 6, characterised in that the cutting elements (30) of the tool upper part (1) bordering the step-like shoulder (35) have resilient elements (39).

8. A cutting and moulding tool according to one of claims 6 and 7, characterised in that the cutting stamp (4) of the tool upper part (1) is mounted in the shape of a collar around a press stamp (7) and a coupling device (18) is disposed between the cutting stamp (4) and the tool upper part (1).


**Revendications**

1. Outil de coupe et de mise en forme de produits plats complexes, comprenant une partie supérieure d'outil (1) avec poinçon de découpage (4) et une partie inférieure d'outil (2) avec matrice de découpage, le poinçon de découpage (4) et la matrice de découpage (5) présentant chacun un bord de coupe, celui-ci suivant la forme d'une ligne de coupe (15) continue, commune, caractérisé en ce que la matrice de découpage (5) et le poinçon de découpage (4) sont, dans la zone de la ligne de coupe (15) continue, constitués d'un grand nombre d'éléments coupants (20, 30) de forme cylindrique, disposés en file et présentant une section transversale à angles multiples, en ce que chacun des éléments coupants (20, 30) présente dans la première surface frontale (21, 31) un bord de coupe (23, 33), en ce que ces bords de coupe (23, 33) des différents éléments (20, 30) forment la ligne de coupe et en ce que la deuxième surface frontale (22, 32) et la zone d'extrémité adjacente de chacun des différents éléments coupants (20, 30) sont ancrées dans la matrice de découpage (5) ou le poinçon de découpage (4).

2. Outil de coupe et de mise en forme suivant la revendication 1, caractérisé en ce qu'un élément coupant (30) de la partie supérieure d'outil (1) et un élément coupant (30) de la partie inférieure d'outil (2) forment chaque fois une paire, en ce que les axes médians (24, 34) de ces deux éléments coupants (20, 30) coïncident et en ce que les surfaces frontales (21, 31) présentant les bords de coupe (23, 33) sont dirigées l'une vers l'autre.

3. Outil de coupe et de mise en forme suivant l'une des revendications 1 et 2, caractérisé en ce que les éléments coupants (20, 30) présentent une section transversale hexagonale, en ce qu'un retrait (25, 35) en forme de gradin et présentant une surface de coupe (26, 36) est réalisé dans la zone de la première surface frontale (21, 31) et en ce que le bord de coupe (23, 33) s'étend d'un angle (27, 37) de l'hexagone vers l'angle opposé (28, 38) en passant par l'axe médian (24, 34).

4. Outil de coupe et de mise en forme suivant l'une des revendications 1 à 3, caractérisé en ce que la section transversale des éléments coupants (20, 30) converge de la première surface frontale (21, 31) présentant le bord de coupe (23, 33) vers la deuxième surface frontale (22, 32).

5. Outil de coupe et de mise en forme suivant l'une des revendications 1 à 4, caractérisé en ce que la matière du poinçon de découpage (4) et de la matrice de découpage (5) est une masse de matière synthétique et en ce que les éléments coupants (20, 30) sont coulés dans cette masse.

6. Outil de coupe et de mise en forme suivant l'une des revendications 1 à 5, caractérisé en ce que les éléments coupants (20) de la partie inférieure d'outil (2) limitent une cavité de mise en forme (16), en ce qu'une zone partielle (45) de la première surface frontale (21) présentant le bord de coupe (23) est biseautée vers la cavité de mise en forme (16), en ce que la surface d'enveloppe (46) de l'élément coupant (20) fait saillie au-delà de la surface de formage (17) de la cavité de mise en forme (16) et en ce qu'elle forme une paroi disposée à angle droit par rapport à cette surface.

7. Outil de coupe et de mise en forme suivant la revendication 6, caractérisé en ce que les éléments coupants (30) de la partie supérieure d'outil (1) présentent des éléments élastiques (39) d'une façon adjacente au retrait en forme de gradin (35).

8. Outil de coupe et de mise en forme suivant l'une des revendications 6 et 7, caractérisé en ce que le poinçon de découpage (4) de la partie supérieure d'outil (1) est agencé en forme de col autour d'un poinçon de pressage (7) et en ce qu'un dispositif de couplage (18) est agencé entre le poinçon de découpage (4) et la partie supérieure d'outil (1).

Fig 1

Fig 3

Fig 2

Fig 4